# EUROPÄISCHE PATENTANMELDUNG

(11) **EP 3 324 062 A1**
(43) Veröffentlichungstag der Anmeldung: **23.05.2018**
(21) Anmeldenummer: 16200022.8
(22) Anmeldetag: 22.11.2016
(51) Int. Cl.: F16C 32/06

(54) **ROTATIONSSYSTEM MIT RADIALER GASLAGERUNG**

(71) Anmelder: Fischer Engineering Solutions AG, 3360 Herzogenbuchsee (CH)
(72) Erfinder: Stieger, Werner, 4702 Oensingen (CH); Boller, Rolf, 4450 Sissach (CH); Hager, Simon, 3012 Bern (CH); Studer, Roy, 4535 Hubersdorf (CH)
(74) Vertreter: Hepp Wenger Ryffel AG

(57) **Zusammenfassung**

Rotationssystem (10) mit mindestens einer radialen Gaslagerung, enthaltend ein Gehäuse (11), eine relativ zum Gehäuse (11) rotierbare Welle (12) sowie mindestens eine Lagerbaugruppe (51), welche die Welle (12) relativ zum Gehäuse (11) durch eine radiale Gaslagerung lagert. Die Lagerbaugruppe (51) weist einen die Welle (12) lagernden ersten Bereich (52) und einen vom Gehäuse (11) gehaltenen oder am oder im Gehäuse (11) integrierten dritten Bereich (54) auf. Die Lagerbaugruppe (51) weist ferner einen den ersten Bereich (52) mit dem dritten Bereich (54) verbindenden zweiten Bereich (53) auf, der zumindest aufgrund seiner Formgebung und/oder aufgrund einer Formgebung des ersten Bereichs (52) elastischer ausgebildet ist als der erste Bereich (52).

## Beschreibung

Die vorliegende Erfindung betrifft ein Rotationssystem mit mindestens einer radialen Gaslagerung.

Rotationssysteme mit radialer Gaslagerung enthalten ein Gehäuse, eine relativ zum Gehäuse rotierbare Welle und mindestens eine Lagerbaugruppe, welche die Welle relativ zum Gehäuse durch eine radiale Gaslagerung lagert. Die Lagerbaugruppe enthält mindestens eine Lagerfläche, innerhalb deren die Welle gelagert ist. Zwischen der Welle und der Lagerfläche ist ein Luftspalt gebildet, der für die Gaslagerung sorgt.

Das Dokument CH 658 499 A5 offenbart eine federnde Stützeinrichtung für Wellenlager von schnell laufenden Rotoren, wie beispielsweise Turbomaschinen. Die Stützeinrichtung ist aus polygonartigen Federelementen und Scheiben zur Begrenzung des Wellenausschlages an der Lagerstelle zusammengesetzt. Die Federelemente enthalten Federstäbe und Federgelenke und werden mit Vorspannung auf einen Kugellageraussenring oder eine Büchse, die das Kugellager aufnimmt, aufgepresst. Hierdurch können vom Rotor auf das Wellenlager quer zur Rotorwellenachse einwirkende Kräfte federnd aufgenommen werden. Allerdings können hohe Temperaturen, hohe Temperaturunterschiede oder weitere insbesondere variable Betriebseinflüsse zu einem erheblichen Verzug der einzelnen Teile der Lagerung führen. Beispielsweise kann sich bei hohen Temperaturen das Gehäuse verformen, wodurch die Lagerflächen ihre Rundheit und Zylindrizität verlieren können oder die Koaxialität beeinträchtigt werden kann.

Das Dokument DE 84 07 526 U1 betrifft eine Triebwerkseinheit für ein Fahrzeug. Diese enthält eine Lagerung mit einem Wälzlager und eine elastisch verformbare elastomere Zwischenhülse, welche ein Gehäuse und einen äusseren Wälzlagerring miteinander verbindet. Auch bei dieser Lagerung können jedoch hohe Temperaturen, hohe Temperaturunterschieden oder weitere insbesondere variable Betriebseinflüsse zu einem erheblichen Verzug der einzelnen Teile der Lagerung führen, wodurch die Lagerflächen ihre Rundheit und Zylindrizität verlieren können oder die Koaxialität beeinträchtigt werden kann.

Bei Gaslagerungen ist es entscheidend, dass die Dimensionen des genannten Luftspaltes möglichst konstant bleiben. Ein zu breiter Luftspalt würde nämlich lokal den Gasdruck reduzieren, so dass die Lagerung instabil wäre. Ein zu enger Luftspalt kann dazu führen, dass die Lagerfläche in Kontakt mit der Welle gerät. Insbesondere bei hohen Rotationsgeschwindigkeiten kann dies zur Zerstörung des gesamten Rotationssystems führen. Allerdings sind viele Rotationssysteme oftmals hohen Temperaturen und/oder hohen Temperaturunterschieden und/oder weiteren insbesondere variablen Betriebseinflüssen, wie beispielsweise variablen Gasdrücken oder Fliehkräften, ausgesetzt. Dies kann zu einem erheblichen Verzug von einzelnen Teilen des Rotationssystems führen. Beispielsweise kann sich bei hohen Temperaturen das Gehäuse verformen, was sich auf die Lagerfläche der Lagerbaugruppe überträgt. So kann etwa die Lagerfläche der Lagerbaugruppe ihre Rundheit und Zylindrizität verlieren, oder die Lagerfläche und die Welle können ihre Koaxialität verlieren. Insgesamt kann ein sicherer Betrieb des Rotationssystems dann nicht mehr gewährleistet werden.

Es ist eine Aufgabe der vorliegenden Erfindung, ein verbessertes Rotationssystem bereitzustellen, welches den genannten Anforderungen selbst bei hohen Rotationsgeschwindigkeiten und/oder hohen Temperaturen und/oder hohen Temperaturunterschieden und/oder weiteren insbesondere variablen Betriebseinflüssen, wie beispielsweise variablen Gasdrücken oder Fliehkräften, möglichst gerecht wird. Der zwischen Lagerbaugruppe und Welle gebildete Luftspalt soll also selbst unter diesen Bedingungen möglichst konstant, also möglichst unabhängig von diesen Bedingungen, bleiben. Insbesondere soll die Lagerfläche der Lagerbaugruppe möglichst rund und zylindrisch bleiben, und die Lagerfläche und die Welle sollen möglichst koaxial zueinander bleiben.

Diese und weitere Aufgaben werden durch das erfindungsgemässe Rotationssystem gelöst. Dieses enthält ein Gehäuse, eine relativ zum Gehäuse rotierbare Welle sowie mindestens eine Lagerbaugruppe, welche die Welle relativ zum Gehäuse durch eine radiale Gaslagerung lagert. Zwischen der Lagerbaugruppe, insbesondere deren unten noch beschriebener Lagerfläche, und der Welle ist also ein Luftspalt gebildet. Bei der radialen Gaslagerung kann es sich um eine aerodynamische Gaslagerung, eine aerostatische Gaslagerung oder um eine Kippsegment-Gaslagerung (englisch: "tilting pad gas bearing") oder eine Folienlagerung handeln.

Erfindungsgemäss weist die Lagerbaugruppe einen die Welle lagernden ersten Bereich und einen vom Gehäuse gehaltenen oder am oder im Gehäuse integrierten dritten Bereich auf, wobei die Lagerbaugruppe einen den ersten Bereich mit dem dritten Bereich verbindenden zweiten Bereich aufweist, der zumindest aufgrund seiner Formgebung und/oder aufgrund einer Formgebung des ersten Bereichs elastischer ausgebildet ist als der erste Bereich. Der innere Bereich kann die oben erwähnte Lagerfläche enthalten, innerhalb deren die Welle gelagert ist.

Die genannte Formgebung des zweiten Bereichs kann beispielsweise durch eine geometrische Materialschwächung des zweiten Bereichs erreicht werden. Eine solche geometrische Materialschwächung kann etwa durch mindestens eine in axialer Richtung gebildete Vertiefung oder mindestens eine die Lagerbaugruppe durchdringende Öffnung gebildet sein. Die Vertiefung kann beispielsweise durch eine lasergesinterte Struktur, eine Bohrung, einen Axialeinstich, eine Laserstruktur, eine Giessrippe und/oder eine gefräste Niere gebildet sein. Beispielsweise kann die Vertiefung oder Öffnung in einem unten noch im Detail erläuterten Distanzflansch gebildet sein, beispielsweise in einem äusseren Abschnitt eines solchen Distanzflansches. Es können auch mehrere Öffnungen vorhanden sein, die dann bevorzugt in Umfangsrichtung gleichmässig um die Rotationsachse verteilt sind. Die Formgebung kann auch durch ein weiter unten noch im Detail beschriebenes Federelement erreicht werden.

Alternativ kann eine Materialschwächung durch eine Kombination verschiedener Materialien und/oder eine Kombination an sich gleicher Materialien mit verschiedenen Eigenschaften erreicht werden. Verschiedene Metalle können zu einem Bimetall zusammengefügt sein. Eine Materialschwächung kann auch durch eine Mischung von zwei oder mehr Materialien, insbesondere von zwei oder mehr Metallen, erreicht werden. An sich gleiche Materialien mit verschiedenen Eigenschaften können beispielsweise durch verschiedene Arten der Herstellung und/oder Bearbeitung erhalten werden, etwa durch Weichglühen, Schäumen und/oder Lasersintern.

Alternativ oder zusätzlich kann der erste Bereich der Lagerbaugruppe aufgrund seiner Formgebung weniger elastisch ausgebildet sein als der zweite Bereich. Dies kann beispielsweise durch mindestens eine Verstärkung des ersten Bereichs erreicht werden. Derartige Verstärkungen können direkt am ersten Bereich angeformt sein. Beispielsweise kann am ersten Bereich mindestens eine Rippe angeformt sein. Bei dem ersten Bereich kann es sich insbesondere um ein Gussteil handeln. Alternativ oder zusätzlich kann mindestens eine Verstärkung am ersten Bereich befestigt sein, beispielsweise aufgeklebt, angeschweisst, angelötet oder angeschraubt.

Durch die erfindungsgemässe Ausbildung kann der zwischen Lagerbaugruppe und Welle gebildete Luftspalt selbst bei hohen Rotationsgeschwindigkeiten und/oder hohen Temperaturen und/oder hohen Temperaturunterschieden und/oder weiteren insbesondere variablen Betriebseinflüssen, wie beispielsweise variablen Gasdrücken oder Fliehkräften, sehr konstant bleiben. Das Rotationssystem kann also auch unter diesen Bedingungen betrieben werden, ohne dass das Risiko einer übermässigen Verformung des Luftspaltes entsteht. Denn der Teil der Lagerbaugruppe, der die Welle lagert, kann dann insgesamt eher starr ausgebildet sein, so dass beispielsweise die Lagerfläche der Lagerbaugruppe auch bei einem Verzug des Gehäuses vergleichsweise rund und zylindrisch bleibt. Durch seine relativ elastischere Ausbildung erlaubt der zweite Bereich insgesamt ein gewisses Spiel des ersten Bereichs gegenüber dem sich verziehenden Gehäuse.

Es ist zweckmässig, dass der zweite Bereich der Lagerbaugruppe zumindest aufgrund seiner Formgebung und/oder aufgrund der Formgebung ihres ersten Bereichs in radialer Richtung elastischer ausgebildet ist als der erste Bereich. Hierdurch können die Rundheit und die Zylindrizität von Welle und erstem Bereich der Lagerbaugruppe erhöht werden. Zudem ist es vorteilhaft, wenn der zweite Bereich der Lagerbaugruppe zumindest aufgrund seiner Formgebung und/oder aufgrund der Formgebung ihres ersten Bereichs in axialer Richtung elastischer ausgebildet ist als der erste Bereich. Hierdurch kann das Risiko reduziert werden, dass der erste Bereich der Lagerbaugruppe, der die Welle lagert, gegenüber der Rotationsache verkippt wird.

Um die erfindungsgemässe Eigenschaft, dass der zweite Bereich der Lagerbaugruppe elastischer ist als ihr erster Bereich, weiter zu unterstützen, kann der zweite Bereich der Lagerbaugruppe aus einem an sich elastischeren Material bestehen als ihr erster Bereich.

In einigen Ausführungsformen bildet der erste Bereich einen radial inneren Bereich der Lagerbaugruppe, der zweite Bereich bildet einen radial mittleren Bereich der Lagerbaugruppe, und der dritte Bereich bildet einen radial äusseren Bereich der Lagerbaugruppe. Der zweite Bereich befindet sich also in radialer Richtung ausserhalb des ersten Bereichs, und der dritte Bereich befindet sich in radialer Richtung ausserhalb des zweiten Bereichs.

In anderen erfindungsgemässen Ausführungsformen kann sich beispielsweise der zweite Bereich der Lagerbaugruppe in axialer Richtung vom dritten Bereich der Lagerbaugruppe erstrecken. Diese Ausführungsform zeichnet sich durch einen kleineren Bauraum aus, insbesondere in axialer Richtung.

Der zweite Bereich der Lagerbaugruppe kann auch zumindest aufgrund seiner Formgebung und/oder aufgrund der Formgebung ihres dritten Bereichs elastischer ausgebildet sein als ihr dritter Bereich. Auf diese Weise kann die Lagerbaugruppe stabiler am Gehäuse angebunden werden.

In einer möglichen Variante kann der zweite Bereich der Lagerbaugruppe aufgrund einer Befestigung am Gehäuse elastischer ausgebildet sein als der dritte Bereich. In dieser Variante kann der dritte Bereich an sich elastischer sein als der zweite Bereich, sofern die Befestigung diese Elastizität soweit herabsetzt, dass der zweite Bereich elastischer ist als der dritte Bereich.

Der erste Bereich kann eine Radiallagerhülse enthalten oder dadurch gebildet sein, welche die Welle in radialer Richtung lagert. Die Radiallagerhülse weist an ihrer Innenseite eine Lagerfläche auf, innerhalb deren die Welle gelagert ist. Die Radiallagerhülse kann rohrförmig ausgebildet sein. Insbesondere kann sie kreiszylindermantelförmig ausgebildet sein. Alternativ kann die Radiallagerhülse aber auch rohrförmig mit einem beispielsweise sechseckigen Querschnitt ausgebildet sein.

An ihrer Aussenseite kann die Radiallagerhülse mindestens eine Kühlstruktur aufweisen, mit deren Hilfe die Radiallagerhülse gekühlt werden kann. Alternativ oder zusätzlich kann die Radiallagerhülse an ihrer Aussenseite mindestens eine Vertiefung, wie beispielsweise eine Kerbe oder eine Einfräsung, und/oder mindestens einen Vorsprung aufweisen, wie beispielsweise einen Steg, der zum Beispiel in Umfangsrichtung verlaufen kann. Hierdurch kann eine Gasströmung an der Aussenseite der Radiallagerhülse beeinflusst werden.

Der zweite Bereich der Lagerbaugruppe kann durch einen inneren Abschnitt eines Distanzflansches gebildet sein, mit dem der erste Bereich der Lagerbaugruppe, insbesondere die oben beschriebene Radiallagerhülse, verbunden ist. Insbesondere kann der innere Abschnitt des Distanzflansches am ersten Bereich der Lagerbaugruppe, insbesondere an der Radiallagerhülse, befestigt sein. Alternativ liegt es ebenso im Rahmen der Erfindung, dass der innere Abschnitt der Distanzscheibe mit dem ersten Bereich der Lagerbaugruppe, insbesondere mit der Radiallagerhülse, einstückig verbunden ist. Eine derartige einstückige Verbindung kann beispielsweise durch Lasersintern erreicht werden.

In bevorzugten Ausgestaltungen weist der innere Abschnitt des Distanzflansches mindestens ein Federelement auf, durch dessen Formgebung der zweite Bereich der Lagerbaugruppe elastischer ausgebildet ist als der erste Bereich der Lagerbaugruppe. Das Federelement kann mindestens einen sich transversal (also nicht parallel) zur radialen Richtung erstreckenden Federabschnitt des inneren Abschnitts des Distanzflansches enthalten. Der Federabschnitt kann bezüglich der Rotationsachse rotationssymmetrisch ausgebildet sein, beispielsweise zylindermantelförmig oder kegelmantelförmig. Bevorzugt enthält das Federelement zwei sich transversal zur radialen Richtung erstreckende Federabschnitte, die sich in entgegengesetzten axialen Richtungen erstrecken. Auf diese Weise wird zwar der Bauraum in axialer Richtung vergrössert; es lässt sich jedoch ein grösserer Weg in radialer Richtung und folglich eine besonders grosse Elastizität in radialer Richtung erreichen.

Der genannte Federabschnitt kann in axialer Richtung über einen radial äusseren Abschnitt des Distanzflansches, der vom Gehäuse gehalten ist, hervorstehen. Alternativ kann der Federabschnitt in axialer Richtung gegenüber einem radial äusseren Abschnitt des Distanzflansches, der vom Gehäuse gehalten ist, zurückversetzt sein. Beide Varianten sorgen auf baulich vergleichsweise einfache Weise für eine Elastizität des zweiten Bereichs, die erfindungsgemäss höher ist als die des ersten Bereichs.

Bevorzugt enthält der innere Abschnitt des Distanzflansches einen hülsenförmigen Abschnitt, welcher in zumindest einem axialen Endbereich mit einem axialen Endbereich des Federabschnitts verbunden ist. Auch dies unterstützt die Elastizität des zweiten Bereichs der Lagerbaugruppe in vorteilhafter Weise.

Bevorzugt ist der hülsenförmige Abschnitt des Distanzflansches mit einer die Welle in radialer Richtung lagernden Radiallagerhülse einstückig ausgebildet oder damit verbunden, insbesondere mit einer wie oben beschriebenen Radiallagerhülse. Die genannte Verbindung kann beispielsweise erreicht werden durch eine Schrumpfverbindung, eine Lötverbindung, eine Schweissverbindung, eine Klebeverbindung, eine Kunststoffgussverbindung, eine Rändelverbindung, eine Lasersinterverbindung, durch hydraulisches Aufpressen, durch eine Klemmverbindung, durch eine Kristallisationsverbindung, durch eine Polygonverbindung, durch eine Pressverbindung, durch eine Gewindeverbindung oder eine Kombination davon.

Vorzugsweise ist der dritte Bereich der Lagerbaugruppe durch einen radial äusseren Abschnitt des Distanzflansches gebildet, der vom Gehäuse gehalten ist. Ein einstückiger Distanzflansch kann also zugleich den zweiten Bereich und den dritten Bereich der Lagerbaugruppe bilden.

Der zweite Bereich, insbesondere der innere Abschnitt des Distanzflansches, kann derart ausgeformt sein, dass der erste Bereich der Lagerbaugruppe, insbesondere eine Innenseite der Radiallagerhülse, bei bestimmungsgemässen Betriebsbedingungen eine maximale radiale Verformung von 50 µm, bevorzugt 10 µm, besonders bevorzugt 1 µm aufweist. Bevorzugt wird diese maximale radiale Verformung bei keiner bestimmungsgemässen Betriebsbedingung überschritten. Die bestimmungsgemässen Betriebsbedingungen können beispielsweise einen Temperaturbereich von -50 °C bis 250 °C und einen Drehzahlbereich von 1 min⁻¹ bis 500'000 min⁻¹ umfassen, bevorzugt einen Temperaturbereich von -160 °C bis 600 °C und einen Drehzahlbereich von 1 min⁻¹ bis 1'000'000 min⁻¹, besonders bevorzugt sogar einen Temperaturbereich von -273,15 °C bis 3'100 °C und einen Drehzahlbereich von 1 min⁻¹ bis 2'500'000 min⁻¹.

Die Lagerbaugruppe kann mindestens einen Kühlkanal aufweisen. Beispielsweise kann ein Kühlkanal im Distanzflansch vorhanden sein, der sich beispielsweise in radialer Richtung erstrecken oder wendelförmig ausgebildet sein kann. Alternativ oder zusätzlich kann ein Kühlkanal zwischen dem Federabschnitt und der Radiallagerhülse gebildet sein, insbesondere zwischen dem Federabschnitt und dem hülsenförmigen Abschnitt. Dieser Kühlkanal kann sich beispielsweise in Umfangsrichtung erstrecken oder wendelförmig ausgebildet sein. Mit Hilfe derartiger Kühlkanäle kann die Temperaturverteilung innerhalb des Rotationssystems eingestellt werden. Dies kann einen weiteren Beitrag dazu leisten, dass der Luftspalt der Gaslagerung möglichst konstante Dimensionen behält. Besonders bevorzugt mündet ein im Distanzflansch gebildeter in radialer Richtung verlaufender Kühlkanal in einen sich zwischen dem Federabschnitt und der Radiallagerhülse in Umfangsrichtung verlaufenden Kühlkanal ein. Auch in einer Radiallagerhülse und/oder im Gehäuse kann mindestens ein Kühlkanal vorgesehen sein.

Alternativ oder zusätzlich zu einem Distanzflansch kann der zweite Bereich der Lagerbaugruppe die Form einer Hülse aufweisen. An einem ersten axialen Ende dieser Hülse kann in radialer Richtung nach innen ein erster Fortsatz angeformt sein, der eine Radiallagerhülse hält. An einem zweiten axialen Ende der Hülse, welches dem ersten axialen Ende gegenüberliegt, kann in radialer Richtung nach aussen ein zweiter Fortsatz angeformt sein, der den dritten Bereich der Lagerbaugruppe bildet und der vom Gehäuse gehalten oder am oder im Gehäuse integriert ist. Diese Ausführungsform zeichnet sich durch einen kleineren Bauraum aus, und zwar vor allem in axialer Richtung.

Die Bauteile der Lagerbaugruppe können verschiedene Materialen enthalten oder daraus bestehen, wie beispielsweise Keramik, Hartmetall (optional mit Chromstahl beschichtet, insbesondere nitriert), Graphit, Titan, Chromstahl, Aluminium, Stahlwerkstoffen, Nickelbasislegierungen (wie beispielsweise Inconel^{®}) oder Kunststoff, wie beispielsweise Polyimid (wie etwa Torlon^{®}), insbesondere faserverstärkter Kunststoff, wie beispielsweise mit Kohlefasern verstärkter PEEK. Dabei ist es denkbar, dass die verschiedenen Bauteile ein und derselben Lagerbaugruppe verschiedene Materialien enthalten oder daraus bestehen. Bevorzugt besteht die Radiallagerhülse aus Keramik und/oder aus Hartmetall.

Das erfindungsgemässe Rotationssystem kann eine insbesondere elektrisch angetriebene Strömungsmaschine sein, wie beispielsweise ein Verdichter, insbesondere ein Turboverdichter, ein Motor oder ein Generator, eine Turbine, insbesondere ein Turbogenerator oder ein Turbolader, ein Kupplungssystem (insbesondere eine Magnetkupplung) oder ein Schwungrad, insbesondere ein kinetischer Speicher oder eine insbesondere gasangetriebene Turbine oder eine Kombination davon.

Im Folgenden werden die Erfindung und ihre Vorteile anhand von mehreren Ausführungsformen und Zeichnungen näher erläutert. Dabei zeigen
- Figur 1:: eine seitliche Schnittansicht durch einen Ausschnitt eines ersten erfindungsgemässen Rotationssystems;
- Figur 2:: eine perspektivische Ansicht des ersten erfindungsgemässen Rotationssystems, jedoch ohne Welle;
- Figur 3:: eine Draufsicht in axialer Richtung auf das erste erfindungsgemässe Rotationssystem ohne Welle;
- Figur 4:: eine seitliche Schnittansicht des ersten erfindungsgemässen Rotationssystems ohne Welle entlang der Schnittlinie A-A in Figur 3;
- Figur 5:: eine schematische seitliche Schnittansicht einer Lagerbaugruppe eines zweiten erfindungsgemässen Rotationssystems;
- Figur 6:: eine schematische seitliche Schnittansicht einer Lagerbaugruppe eines dritten erfindungsgemässen Rotationssystems;
- Figur 7:: eine schematische seitliche Schnittansicht einer Lagerbaugruppe eines vierten erfindungsgemässen Rotationssystems;
- Figur 8:: eine schematische seitliche Schnittansicht einer Lagerbaugruppe eines fünften erfindungsgemässen Rotationssystems;
- Figur 9:: eine schematische seitliche Schnittansicht einer Lagerbaugruppe eines sechsten erfindungsgemässen Rotationssystems;
- Figur 10:: eine schematische seitliche Schnittansicht einer Lagerbaugruppe eines siebten erfindungsgemässen Rotationssystems;
- Figur 11:: eine schematische seitliche Schnittansicht einer Lagerbaugruppe eines achten erfindungsgemässen Rotationssystems;
- Figur 12:: eine schematische seitliche Schnittansicht einer Lagerbaugruppe eines neunten erfindungsgemässen Rotationssystems;
- Figur 13:: eine seitliche Schnittansicht durch einen Ausschnitt eines zehnten erfindungsgemässen Rotationssystems.

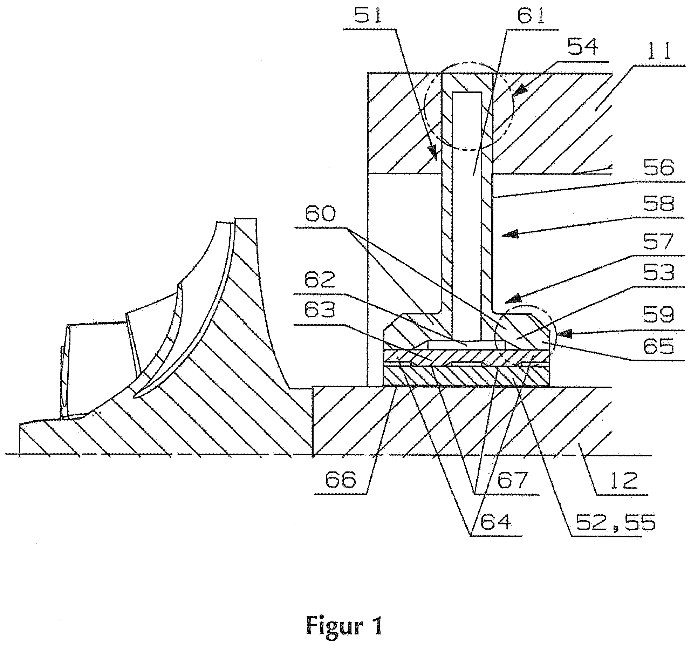

Bei dem in den Figuren 1 bis 4 dargestellten ersten erfindungsgemässen Rotationssystem 10 handelt es sich um einen Turboverdichter. Dieser Verdichter enthält ein Gehäuse 11, eine relativ zum Gehäuse rotierbare Welle 12 und eine Lagerbaugruppe 51, welche die Welle 12 relativ zum Gehäuse 11 durch eine radial Gaslagerung lagert. An einem Ende der Welle 12 ist ein Verdichterrad 78 befestigt. Für die Gaslagerung sorgt ein Luftspalt, der zwischen der Welle 12 und einer unten noch im Detail beschriebenen Radiallagerhülse 55 gebildet ist.

Die Lagerbaugruppe 51 enthält einen ersten, radial inneren Bereich 52, der durch die Radiallagerhülse 55 gebildet ist und die Welle 12 lagert. Weiterhin enthält die Lagerbaugruppe 51 einen vom Gehäuse 11 gehaltenen dritten, radial äusseren Bereich 54. Ausserdem weist die Lagerbaugruppe 51 einen den ersten Bereich 52 mit dem dritten Bereich 54 verbindenden zweiten, radial mittleren Bereich 53 auf.

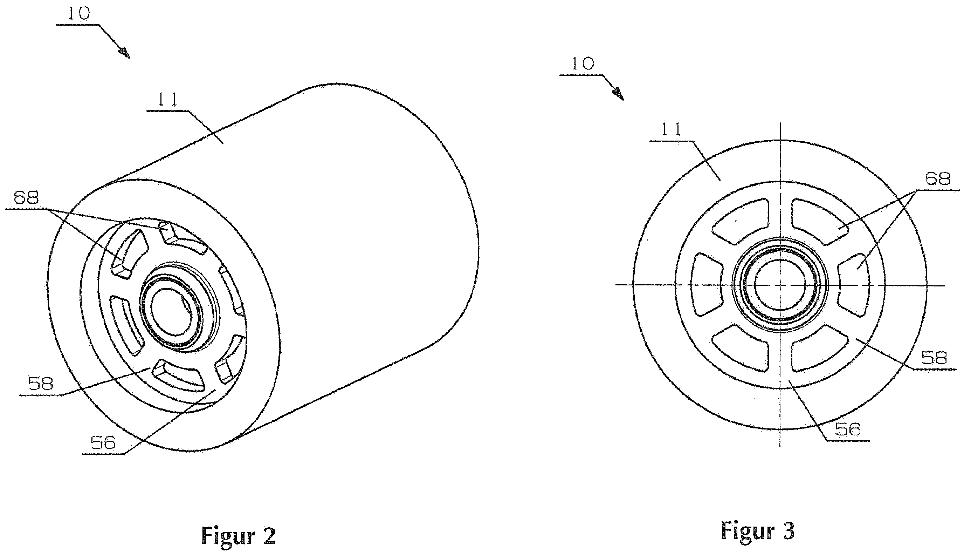

Die Lagerbaugruppe 51 enthält einen Distanzflansch 56 mit einem inneren Abschnitt 57 und einem äusseren Abschnitt 58. Der innere Abschnitt 57 bildet den zweiten Bereich 53 der Lagerbaugruppe 51. Dieser innere Abschnitt 57 weist ein Federelement 59 auf, durch dessen Formgebung der zweite Bereich 53 der Lagerbaugruppe 51 elastischer ausgebildet ist als ihr erster Bereich 52 (also die Radiallagerhülse 55). Im Detail enthält das Federelement 59 zwei sich in entgegengesetzten axialen Richtungen erstreckende zylindermantelförmige Federabschnitte 60. In axialer Richtung steht jeder der Federabschnitte 60 über den radial äusseren Abschnitt 58 des Distanzflansches 56 hervor. Der innere Abschnitt 57 des Distanzflansches 56 enthält ferner einen hülsenförmigen Abschnitt 63, welcher in zwei gegenüberliegenden axialen Endbereichen 64 mit jeweils einem axialen, kegelmantelförmigen Endbereich 65 eines der Federabschnitte 60 verbunden ist. Unter anderem aufgrund dieser Struktur (und auch aufgrund der anhand der nachfolgenden Figuren 2 und 3 erläuterten Öffnungen) ist der zweite Bereich 53 der Lagerbaugruppe 51 (also der innere Abschnitt 57 des Distanzflansches 56) elastischer ausgebildet als ihr erster Bereich 52 (also die Radiallagerhülse 55).

An der Innenseite des hülsenförmigen Abschnitts 63 sind zwei in Umfangsrichtung verlaufende Stege 67 angeformt, die in axialer Richtung beabstandet und symmetrisch angeordnet sind. An diesen Stegen 67 ist der hülsenförmige Abschnitt 63 mit der Radiallagerhülse 55 verbunden. Dies kann beispielsweise über eine Pressverbindung erreicht werden. Alternativ ist es natürlich auch denkbar, dass an der Aussenseite der Radiallagerhülse 55 Stege angeformt sind, an denen die Radiallagerhülse 55 am hülsenförmigen Abschnitt 63 befestigt ist. Die Stege 67 erlauben eine gezielte umlaufende Einspannung der Radiallagerhülse 55. Die Auflageflächen, an denen die Stege 67 aufliegen, können umlaufende oder auch nur sektorweise unterbrochen sein. Die Auflageflächen erweitern den mittleren elastischen Bereich und begünstigen das Thermomanagement. Stege können innen oder aussen angebracht sein. Technisch sind die Lösungen recht gleichwertig, aber aus produktionstechnischer Hinsicht kann je nach Ausführung die eine oder andere Variante Vorteile bieten.

Die Radiallagerhülse 55 ist kreiszylindermantelförmig und damit rohrförmig ausgebildet. Die Innenseite der Radiallagerhülse 55 weist eine Lagerfläche 66 auf. Zwischen dieser Lagerfläche 66 und der Welle 12 ist der genannte Luftspalt gebildet, der für die Gaslagerung der Welle 12 innerhalb der Lagerfläche 66 sorgt.

Der zweite Bereich 53 der Lagerbaugruppe 51, also der innere Abschnitt 57 des Distanzflansches 56, ist in dieser erfindungsgemässen Ausführungsform derart ausgeformt, dass die Innenseite der Radiallagerhülse 55 bei bestimmungsgemässen Betriebsbedingungen eine maximale radiale Verformung von 50 µm, bevorzugt 10 µm, besonders bevorzugt 1 µm aufweist. Bevorzugt wird diese maximale radiale Verformung bei keiner bestimmungsgemässen Betriebsbedingung überschritten. Die bestimmungsgemässen Betriebsbedingungen können beispielsweise einen Temperaturbereich von -50 °C bis 250 °C und einen Drehzahlbereich von 1 min⁻¹ bis 500'000 min⁻¹ umfassen, bevorzugt einen_Temperaturbereich von -160 °C bis 600 °C und einen Drehzahlbereich von 1 min⁻¹ bis 1'000'000 min⁻¹, besonders bevorzugt sogar einen Temperaturbereich von -273,15 °C bis 3'100 °C und einen Drehzahlbereich von 1 min⁻¹ bis 2'500'000 min⁻¹.

Der Distanzflansch 56 besteht bevorzugt aus Aluminium, Stahl, Chromstahl, und die Radiallagerhülse 55 besteht bevorzugt aus Hartmetall, Keramik, beschichtetem Stahl, beschichtetem Titan oder Aluminium. Diese spezielle Materialkombination trägt (zusätzlich zu den Öffnungen und dem Federelement 59) auch dazu bei, dass der zweite Bereich 53 elastischer ist als der erste Bereich 52. Der zweite Bereich 53 ist aufgrund seiner Formgebung in diesem Ausführungsbeispiel auch elastischer ausgebildet als der dritte, äussere Bereich 54.

Der Distanzflansch 56 weist sechs Kühlkanäle 61 auf, die sich in radialer Richtung erstrecken, von denen in Figur 1 jedoch nur einer erkennbar ist. Weiterhin enthält die Lagerbaugruppe 51 zwischen dem Federabschnitt 60 und dem hülsenförmigen Abschnitt 33 einen sich in Umfangsrichtung erstreckenden Kühlkanal 62, in den die sechs radialen Kühlkanäle 61 einmünden. Natürlich kann auch eine andere Anzahl an Kühlkanälen 61 vorhanden sein.

Wie der perspektivischen Ansicht in Figur 2 zu entnehmen ist, weist der äussere Abschnitt 58 des Distanzflansches 56 sechs in Umfangsrichtung gleichmässig verteilte Öffnungen 68 auf, die ihn in axialer Richtung durchdringen. Hierdurch erhält der äussere Abschnitt 58 des Distanzflansches 56 eine geometrische Materialschwächung. Diese spezielle Formgebung sorgt (zusätzlich zum Federelement 59) dafür, dass der zweite Bereich 53 der Lagerbaugruppe 51 elastischer ausgebildet ist ihr erster Bereich 52.

Figur 3 zeigt eine Draufsicht auf den Turboverdichter 10 in axialer Richtung. Wie auch in Figur 2 ist die Welle hier nicht dargestellt. Zwischen jeweils zwei benachbarten Öffnungen 68 erstreckt sich einer der hier nicht erkennbaren radialen Kühlkanäle 61.

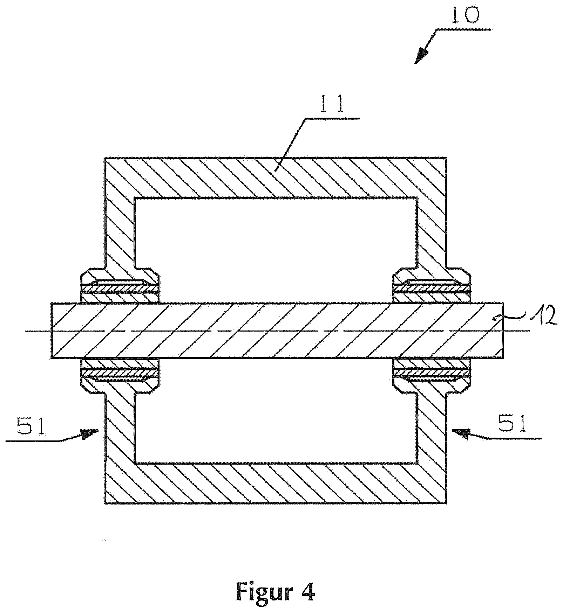

Figur 4 ist eine seitliche Schnittansicht entlang der Linie A-A in Figur 3, hier jedoch mit der Welle 12. Der Turboverdichter 10 enthält zwei in axialem Abstand angeordnete Lagerbaugruppen 51, die spiegelsymmetrisch zueinander aufgebaut sind.

Die in den Figuren 1 bis 4 dargestellte Ausführungsform weist insgesamt den Vorteil einer vergleichsweise grossen Elastizität auf.

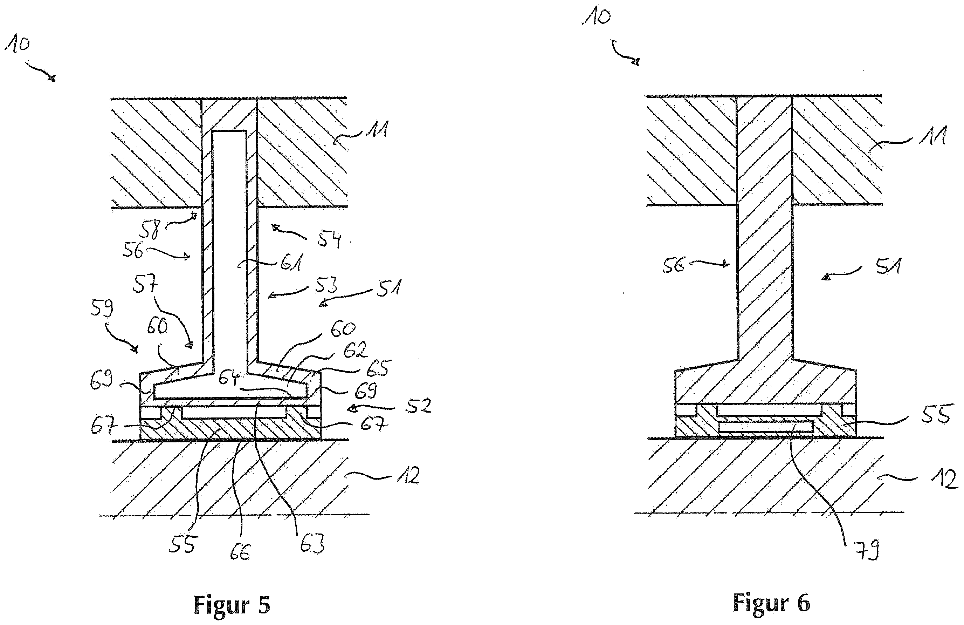

In den Figuren 5 bis 12 sind in schematischen seitlichen Schnittansichten acht weitere Lagerbaugruppen erfindungsgemässer Rotationssysteme dargestellt.

Im zweiten Ausführungsbeispiel gemäss Figur 5 sind im Gegensatz zum ersten Ausführungsbeispiel keine Stege an der Innenseite des hülsenförmigen Abschnitts 63 gebildet, sondern an der Aussenseite der Radiallagerhülse 55. Zudem enthält das Federelement 59 zwischen den Endbereichen 64 des hülsenförmigen Abschnitts 63 und den axialen Endbereichen 65 des Federabschnitts 60 zwei sich in radialer Richtung erstreckende Abschnitte 69. Zudem sind die Federabschnitte 60 hier nicht zylindermantelförmig, sondern kegelmantelförmig ausgebildet.

In Figur 6 enthält die Radiallagerhülse 55 einen sich in Umfangsrichtung erstreckenden Kühlkanal 79, mittels dessen die Radiallagerhülse 55 und ein benachbarter Bereich der Welle 12 gekühlt werden können.

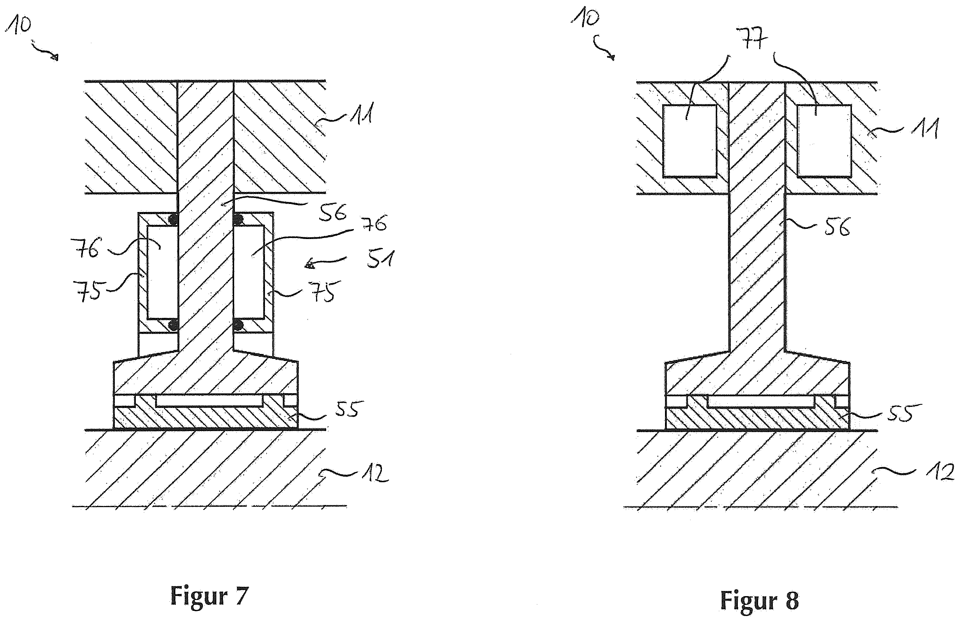

Beim Ausführungsbeispiel gemäss Figur 7 sind am Distanzflansch 56 zwei Kühlflansche 75 montiert, welche zusammen mit je einer axialen Stirnfläche des Distanzflansches 56 einen sich in Umfangsrichtung erstreckenden Kühlkanal 76 einschliessen. Hierdurch kann der Distanzflansch 56 gekühlt werden.

In der in Figur 8 dargestellten Ausführungsform enthält das Gehäuse 11 enthält im Bereich der Distanzflansches 56 zwei im Umfangsrichtung verlaufende Kühlkanäle 77, wodurch das Gehäuse 11 kühlbar ist.

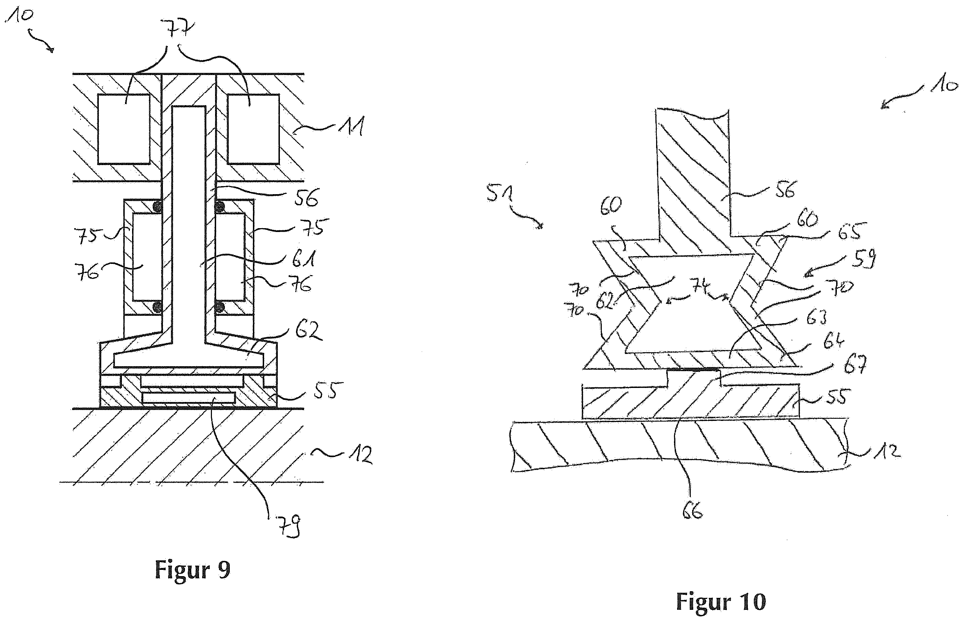

Selbstverständlich sind auch beliebige Kombinationen der in den Figuren 5 bis 8 dargestellten Kühlstrukturen möglich. So ist beispielsweise ein sechstes Ausführungsbeispiel in Figur 9 gezeigt, welches eine Radiallagerhülse 15 mit einem Kühlkanal 79, einen sich in radialer Richtung im Distanzflansch 56 erstreckenden Kühlkanal 61, zwei am Distanzflansch 56 montierte Kühlflansche 75 und zwei im Gehäuse 11 verlaufende Kühlkanäle 77 aufweist.

In Figur 10 enthält die Radiallagerhülse 55 nur einen einzigen Steg 67, der in axialer Richtung mittig angeordnet ist. Zwischen den zylindermantelförmigen Federabschnitten 60 und dem hülsenförmigen Abschnitt 63 erstrecken sich vier kegelmantelförmige Abschnitte 70. Zwei axial äussere dieser kegelmantelförmigen Abschnitte 70 sind mit den Federabschnitten 60 verbunden, und zwei axial innere dieser kegelmantelförmigen Abschnitte 70 sind mit dem hülsenförmigen Abschnitt 63 verbunden. In einem axial mittleren Bereich zwischen den Federabschnitten 60 und dem hülsenförmigen Abschnitt 63 sind je zwei der kegelmantelförmigen Abschnitte 70 in einem Verbindungsbereich 74 miteinander verbunden. Diese Verbindungsbereiche 74 sind in axialer Richtung gegenüber den axialen Endbereichen 64, 65 des hülsenförmigen Abschnitts 63 und des Federabschnitts 60 zurückversetzt. Zwischen den Federabschnitten 60, dem hülsenförmigen Abschnitt 63 und dem kegelmantelförmigen Abschnitt 70 ist ein in Umfangsrichtung verlaufender Kühlkanal 62 gebildet. Diese Ausführungsform erfordert in axialer Richtung weniger Bauraum und kann verwendet werden, wenn in radialer Richtung mehr Freiraum besteht.

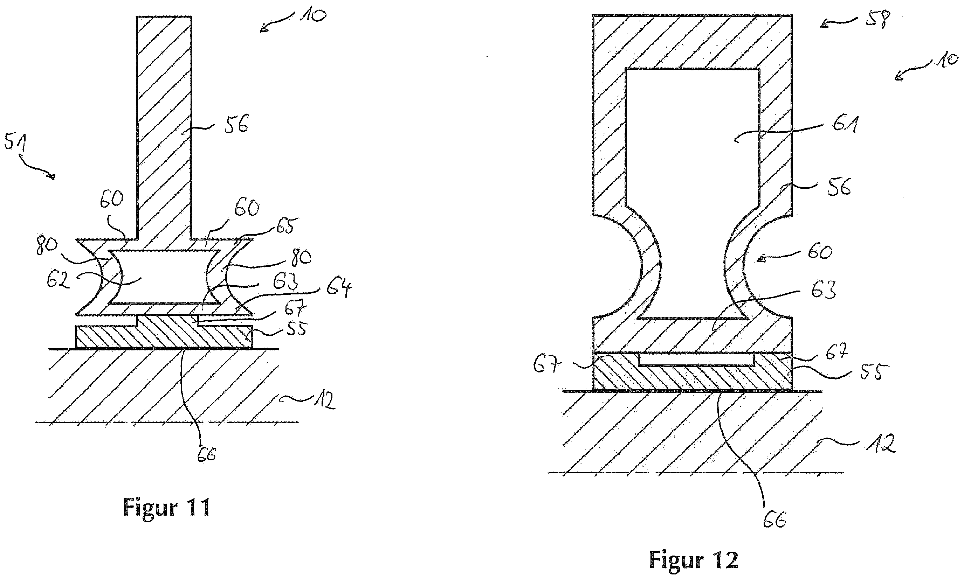

In Figur 11 sind anstelle der kegelmantelförmigen Abschnitte 70 der Figur 10 zwei gebogene Abschnitte 80 vorhanden, die sich zwischen den zylindermantelförmigen Federabschnitten 60 und dem hülsenförmigen Abschnitt 63 erstrecken. Auch hierdurch ist ein in Umfangsrichtung verlaufender Kühlkanal 62 gebildet. Diese Ausführungsform erfordert ebenfalls in axialer Richtung weniger Bauraum und kann verwendet werden, wenn in radialer Richtung mehr Freiraum besteht.

Figur 12 zeigt ein weiteres Ausführungsbeispiel. Hier sind Stege 67 an der Aussenseite der Radiallagerhülse 55 angeformt, die sich jeweils an den axialen Enden befinden. Hier ist ein Federabschnitt 60 in axialer Richtung gegenüber einem radial äusseren Abschnitt 58 des Distanzflansches 56 zurückversetzt. Diese Ausführungsform bietet deutlich mehr Platz für die Kühlkanäle, was zur Reduktion von Druckverlusten vorteilhaft ist.

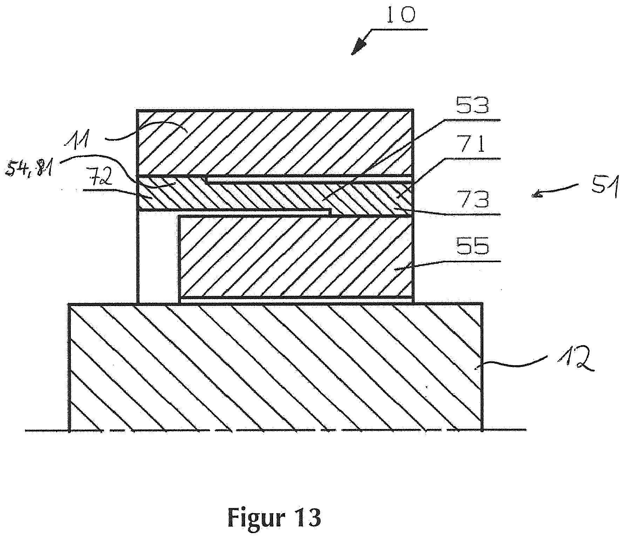

In Figur 13 ist eine seitliche Schnittansicht durch einen Ausschnitt eines zehnten erfindungsgemässen Rotationssystems 10 widergegeben. Dieses Ausführungsbeispiel enthält im Gegensatz zu den oben beschriebenen keinen Distanzflansch. Stattdessen weist der zweite Bereich 53 der Lagerbaugruppe 51 hier die Form einer Hülse auf. An einem ersten axialen Ende dieser Hülse 53 ist in radialer Richtung nach innen ein erster Fortsatz 73 angeformt, der eine Radiallagerhülse 55 hält. An einem zweiten axialen Ende 72 der Hülse 53, welches dem ersten axialen Ende 71 gegenüberliegt, ist in radialer Richtung nach aussen ein zweiter Fortsatz 81 angeformt, der einen dritten Bereich 54 der Lagerbaugruppe 51 bildet und der vom Gehäuse 11 gehalten ist. Diese Ausführungsform zeichnet sich durch einen kleineren Bauraum aus, und zwar vor allem in axialer Richtung.

## Patentansprüche

1. Rotationssystem (10) mit mindestens einer radialen Gaslagerung, enthaltend:
- ein Gehäuse (11),
- eine relativ zum Gehäuse (11) rotierbare Welle (12) und
- mindestens eine Lagerbaugruppe (51), welche die Welle (12) relativ zum Gehäuse (11) durch eine radiale Gaslagerung lagert,
**dadurch gekennzeichnet, dass**
die Lagerbaugruppe (51) einen die Welle (12) lagernden ersten Bereich (52) und einen vom Gehäuse (11) gehaltenen oder am oder im Gehäuse (11) integrierten dritten Bereich (54) aufweist, wobei die Lagerbaugruppe (51) einen den ersten Bereich (52) mit dem dritten Bereich (54) verbindenden zweiten Bereich (53) aufweist, der zumindest aufgrund seiner Formgebung und/oder aufgrund einer Formgebung des ersten Bereichs (52) elastischer ausgebildet ist als der erste Bereich (52).

2. Rotationssystem (10) gemäss Anspruch 1,
**dadurch gekennzeichnet, dass**
der zweite Bereich (53) der Lagerbaugruppe (51) aus einem an sich elastischeren Material besteht als ihr erster Bereich (52).

3. Rotationssystem (10) gemäss einem der vorangehenden Ansprüche,
**dadurch gekennzeichnet, dass**
der erste Bereich (52) einen radial inneren Bereich (52) der Lagerbaugruppe (51), der zweite Bereich (53) einen radial mittleren Bereich (53) der Lagerbaugruppe (51) und der dritte Bereich (54) einen radial äusseren Bereich (54) der Lagerbaugruppe (51) bildet.

4. Rotationssystem (10) gemäss einem der vorangehenden Ansprüche,
**dadurch gekennzeichnet, dass**
der zweite Bereich (53) zumindest aufgrund seiner Formgebung und/oder aufgrund der Formgebung ihres dritten Bereichs (54) elastischer ausgebildet ist als der dritte Bereich (54).

5. Rotationssystem (10) gemäss einem der vorangehenden Ansprüche,
**dadurch gekennzeichnet, dass**
der erste Bereich (52) eine insbesondere rohrförmige Radiallagerhülse (55) enthält oder dadurch gebildet ist, deren Innenseite eine Lagerfläche (66) aufweist, innerhalb deren die Welle (12) in radialer Richtung gelagert ist.

6. Rotationssystem (10) gemäss einem der vorangehenden Ansprüche,
**dadurch gekennzeichnet, dass**
der zweite Bereich (53) der Lagerbaugruppe (51) durch einen inneren Abschnitt (57) eines Distanzflansches (56) gebildet ist, mit dem der erste Bereich (52) der Lagerbaugruppe (51), insbesondere die Radiallagerhülse (55), verbunden ist, wobei insbesondere der erste Bereich (52) am inneren Abschnitt (57) befestigt ist.

7. Rotationssystem (10) gemäss Anspruch 6,
**dadurch gekennzeichnet, dass**
der innere Abschnitt (57) des Distanzflansches (56) mindestens ein Federelement (59) aufweist, durch dessen Formgebung der zweite Bereich (53) der Lagerbaugruppe (51) elastischer ausgebildet ist als der erste Bereich (52) der Lagerbaugruppe (51).

8. Rotationssystem (10) gemäss Anspruch 7,
**dadurch gekennzeichnet, dass**
das Federelement (59) mindestens einen sich transversal zur radialen Richtung erstreckenden Federabschnitt (60) des inneren Abschnitts (57) des Distanzflansches (56) enthält.

9. Rotationssystem (10) gemäss Anspruch 8,
**dadurch gekennzeichnet, dass**
der Federabschnitt (60) in axialer Richtung über einen radial äusseren Abschnitt (58) des Distanzflansches (56), der vom Gehäuse (11) gehalten ist, hervorsteht.

10. Rotationssystem (10) gemäss Anspruch 8,
**dadurch gekennzeichnet, dass**
der Federabschnitt (60) in axialer Richtung gegenüber einem radial äusseren Abschnitt (58) des Distanzflansches (56), der vom Gehäuse (11) gehalten ist, zurückversetzt ist.

11. Rotationssystem (10) gemäss einem der Ansprüche 8 bis 10,
**dadurch gekennzeichnet, dass**
der innere Abschnitt (57) des Distanzflansches (56) einen hülsenförmigen Abschnitt (63) enthält, welcher in zumindest einem axialen Endbereich (64) mit einem axialen Endbereich (65) des Federabschnitts (60) verbunden ist.

12. Rotationssystem (10) gemäss Anspruch 11,
**dadurch gekennzeichnet, dass**
der hülsenförmige Abschnitt (63) mit einer die Welle (12) in radialer Richtung lagernden Radiallagerhülse (55) einstückig ausgebildet oder damit verbunden ist, insbesondere durch eine Schrumpfverbindung, eine Lötverbindung, eine Schweissverbindung, eine Klebeverbindung, eine Kunststoffgussverbindung, eine Rändelverbindung, eine Lasersinterverbindung, durch hydraulisches Aufpressen, durch eine Klemmverbindung, durch eine Kristallisationsverbindung, durch eine Polygonverbindung, durch eine Pressverbindung, durch eine Gewindeverbindung oder eine Kombination davon.

13. Rotationssystem (10) gemäss einem der Ansprüche 6 bis 12,
**dadurch gekennzeichnet, dass**
der dritte Bereich (54) der Lagerbaugruppe (51) durch einen radial äusseren Abschnitt (58) des Distanzflansches (56) gebildet ist, der vom Gehäuse (11) gehalten ist.

14. Rotationssystem (10) gemäss einem der vorangehenden Ansprüche,
**dadurch gekennzeichnet, dass**
der zweite Bereich (53), insbesondere der innere Abschnitt (57) des Distanzflansches (56), derart ausgeformt ist, dass der erste Bereich (52), insbesondere eine Innenseite der Radiallagerhülse (55), bei bestimmungsgemässen Betriebsbedingungen eine maximale radiale Verformung von 50 µm, bevorzugt 10 µm, besonders bevorzugt 1 µm aufweist.

15. Rotationssystem (10) gemäss einem der vorangehenden Ansprüche,
**dadurch gekennzeichnet, dass**
die Lagerbaugruppe (51), insbesondere der Distanzflansch (56), mindestens einen sich insbesondere in radialer Richtung erstreckenden Kühlkanal (61) aufweist.

16. Rotationssystem (10) gemäss einem der vorangehenden Ansprüche,
**dadurch gekennzeichnet, dass**
die Lagerbaugruppe (51) mindestens einen sich insbesondere in Umfangsrichtung erstreckenden Kühlkanal (62, 76, 79) aufweist, der insbesondere in der Radiallagerhülse (55) oder zwischen dem Federabschnitt (60) und der Radiallagerhülse (55) gebildet ist, insbesondere zwischen dem Federabschnitt (60) und dem hülsenförmigen Abschnitt (63).

17. Rotationssystem (10) gemäss einem der vorangehenden Ansprüche,
**dadurch gekennzeichnet, dass**
das Rotationssystem (10) eine insbesondere elektrisch angetriebene Strömungsmaschine (10) ist, wie beispielsweise ein Verdichter, insbesondere ein Turboverdichter, ein Motor oder ein Generator, eine Turbine, insbesondere ein Turbogenerator oder ein Turbolader, ein Kupplungssystem (insbesondere eine Magnetkupplung) oder ein Schwungrad, insbesondere ein kinetischer Speicher oder eine insbesondere gasangetriebene Turbine oder eine Kombination davon.

18. Rotationssystem (10) gemäss einem der vorangehenden Ansprüche,
**dadurch gekennzeichnet, dass**
die Formgebung des zweiten Bereichs (53) durch eine geometrische Materialschwächung des zweiten Bereichs (53) gebildet ist, insbesondere durch mindestens eine in axialer Richtung gebildete Vertiefung oder mindestens eine die Lagerbaugruppe durchdringende Öffnung (68), insbesondere in einem Distanzflansch (56), insbesondere in einem äusseren Abschnitt (58) eines Distanzflansches (56).

19. Rotationssystem (10) gemäss einem der vorangehenden Ansprüche,
**dadurch gekennzeichnet, dass**
der zweite Bereich (53) der Lagerbaugruppe (51) die Form einer Hülse aufweist, wobei an einem ersten axialen Ende der Hülse (53) in radialer Richtung nach innen ein erster Fortsatz (73) angeformt ist, der eine Radiallagerhülse (55) hält, und wobei an einem zweiten axialen Ende der Hülse (53), welches dem ersten axialen Ende gegenüberliegt, in radialer Richtung nach aussen ein zweiter Fortsatz (81) angeformt ist, der den dritten Bereich (54) bildet und der vom Gehäuse (11) gehalten oder am oder im Gehäuse (11) integriert ist.
